# EUROPÄISCHE PATENTSCHRIFT

(11) **EP 4 161 743 B1**
(45) Veröffentlichungstag und Bekanntmachung des Hinweises auf die Patenterteilung: **14.02.2024**
(21) Anmeldenummer: 22743823.1
(22) Anmeldetag: 13.07.2022
(51) Int. Cl.: B25J 15/06, B25J 19/00

(54) **SAUGGREIFEREINRICHTUNG UND VERFAHREN ZUM BETREIBEN EINER SAUGGREIFEREINRICHTUNG**
VACUUM GRIPPER AND METHOD FOR OPERATING A VACUUM GRIPPER
DISPOSITIF DE PRÉHENSION PAR ASPIRATION ET PROCÉDÉ POUR FAIRE FONCTIONNER UN DISPOSITIF DE PRÉHENSION PAR ASPIRATION

(30) Priorität: 02.08.2021 DE 102021119995
(43) Veröffentlichungstag der Anmeldung: 12.04.2023
(73) Patentinhaber: J. Schmalz GmbH, 72293 Glatten (DE)
(72) Erfinder: SCHAAF, Walter, 72250 Freudenstadt-Grüntal (DE)
(74) Vertreter: DREISS Patentanwälte PartG mbB
(86) Internationale Anmeldenummer: PCT/EP2022/069616
(87) Internationale Veröffentlichungsnummer: WO 2023/011880

(56) Entgegenhaltungen:
- EP-B1- 1 816 094
- EP-B1- 2 616 373
- WO-A1-2021/079738
- US-A1- 2020 361 098

## Beschreibung

Die Erfindung betrifft eine Sauggreifereinrichtung mit einem Saugkörper und mit einer Verschleißdetektionseinrichtung zur Detektion eines Verschleißzustandes des Saugkörpers. Die Erfindung betrifft auch ein Verfahren zum Betreiben einer solchen Sauggreifereinrichtung.

Sauggreifereinrichtungen dienen zum Greifen von Gegenständen mittels Unterdruck und finden beispielsweise als Endeffektoren in Unterdruckhandhabungsanlagen Verwendung. Sie umfassen üblicherweise wenigstens einen Saugkörper, der einen Sauginnenraum begrenzt und einen Anlageabschnitt bzw. Dichtlippe zur Anlage an einen zu greifenden Gegenstand aufweist. Um einen Gegenstand zu greifen, wird der Saugkörper mit dem Anlageabschnitt an den zu greifenden Gegenstand angesetzt und dann der Sauginnenraum des Saugkörpers mit Unterdruck beaufschlagt. Zum Ablegen des Gegenstands wird der Sauginnenraum dann wieder belüftet.

Es sind Sauggreifer mit unterschiedlich ausgebildeten Saugkörpern bekannt. Beispielsweise sind Elastomersauger bekannt, bei denen der Saugkörper aus einem Elastomermaterial besteht, welches sich beim Ansaugen an eine Außenfläche des zu greifenden Gegenstands dichtend anschmiegt. Außerdem sind Sauggreifer bekannt, bei denen der Saugkörper aus einem porösen Schaummaterial besteht, durch welches ein zu greifender Gegenstand angesaugt werden kann.

Bei bestimmungsgemäßem Gebrauch eines solchen Saugkörpers, also insbesondere bei wiederholtem Ansaugen und Ablegen eines Gegenstands, kommt es in der Regel zu gebrauchsbedingtem Verschleiß des Saugkörpers, insbesondere durch mechanischen Abrieb im Bereich des Anlageabschnittes. Ein solcher gebrauchsbedingter Verschleiß kann dazu führen, dass eine Dichtwirkung des Saugkörpers beeinträchtigt wird und somit ein Gegenstand nicht mehr mit der gewünschten Zuverlässigkeit gegriffen werden kann. Daher ist es wichtig, einen Verschleißzustand des Saugkörpers überwachen zu können.

Zu diesem Zweck ist es beispielsweise aus EP 1 816 094 B1 bekannt, den Saugkörper zumindest abschnittsweise mit einem Element auszustatten, dessen Farbe sich im Laufe der Zeit ändert und auf diese Weise einen Verschleißzustand des Saugkörpers repräsentiert.

Aus der EP 2 616 373 B1 ist ein Verfahren zur elektrischen Ermittlung und Anzeige des aktuellen Verschleißgrades eines Sauggreifers bekannt. Dieses Dokument offenbart demnach den Oberbegriff von Anspruch 1. Die US 2020 361098 A1 und die WO 2021 079738 A1 beschreiben Maßnahmen zur elektrischen Erfassung des Verschleißes eines Sauggreifers.

Der Erfindung liegt die Aufgabe zugrunde, bei einer Sauggreifereinrichtung einen Verschleißzustand des Saugkörpers mit einfachen Mitteln zuverlässig bestimmen zu können.

Diese Aufgabe wird durch eine Sauggreifereinrichtung mit den Merkmalen des Anspruchs 1 gelöst.

Die Sauggreifereinrichtung umfasst wenigstens einen Saugkörper zum Ansaugen eines Gegenstands. Insbesondere kann es sich bei dem Saugkörper um einen Elastomersauger oder um ein poröses Schaummaterial handeln. Der Saugkörper kann insbesondere Teil eines übergeordneten Sauggreifers sein, beispielsweise eines Flächensauggreifers. Der Saugkörper unterliegt im Zuge seines bestimmungsgemäßen Gebrauchs, also insbesondere bei wiederholtem Ansaugen und Ablegen eines Gegenstands, zumindest abschnittsweise einem gebrauchsbedingten Verschleiß. Insbesondere unterliegt der Saugkörper einem mechanischen Abrieb. Der gebrauchsbedingte Verschleiß tritt insbesondere in einem Anlageabschnitt des Saugkörpers auf, mittels dessen der Saugkörper an einen anzusaugenden Gegenstand angelegt wird.

Die Sauggreifereinrichtung umfasst außerdem eine Verschleißdetektionseinrichtung zur Detektion eines Verschleißzustandes, insbesondere eines Verschleißgrades, des Saugkörpers. Insbesondere ist die Verschleißdetektionseinrichtung dazu ausgebildet, zu detektieren, ob und gegebenenfalls wie viel Material des Saugkörpers durch Verschleiß, bspw. durch Reibkontakt mit einem angesaugten Gegenstand, bereits abgerieben wurde.

Die Verschleißdetektionseinrichtung umfasst wenigstens einen Verschleißabschnitt, der im Zuge eines gebrauchsbedingten Verschleißes des Saugkörpers selbst verschleißt, insbesondere einem mechanischen Abrieb unterliegt. Bei dem Verschleißabschnitt handelt es sich insbesondere um einen Materialabschnitt, welcher derart angeordnet ist, dass er im Zuge eines gebrauchsbedingten Verschleißes des Saugkörpers selbst einem mechanischen Abrieb unterliegt. Es ist denkbar, dass der Verschleißabschnitt automatisch mit verschleißt, wenn der Saugkörper verschleißt, insbesondere mit einem Verschleiß des Saugkörpers korrelierend. Es ist auch denkbar, dass der Verschleißabschnitt erst bei Erreichen eines vorgegebenen Verschleißgrades des Saugkörpers, insbesondere bei Erreichen einer vorgegebenen Abriebmenge des Saugkörpers, verschleißt (bspw. erst nach mehreren durchgeführten Greifzyklen) .

Die Verschleißdetektionseinrichtung umfasst außerdem wenigstens einen Fluidkanal, welcher mit dem wenigstens einen Verschleißabschnitt derart zusammenwirkt, dass durch Verschleiß des wenigstens einen Verschleißabschnittes ein Durchflussquerschnitt des Fluidkanals, z.B. für einströmende und/oder durchströmende Luft, verändert wird und/oder ein Fluiddurchfluss, insbesondere Luftdurchfluss, durch den Fluidkanal überhaupt erst freigegeben wird.

Insofern können Verschleißabschnitt und Fluidkanal beispielsweise derart ausgebildet sein und miteinander zusammenwirken, dass bei Erreichen eines vorgegebenen Verschleißgrades, insbesondere eines vorgegebenen Materialabriebs, des Verschleißabschnitts ein Fluiddurchfluss durch den Fluidkanal zunächst überhaupt erst freigegeben wird und dann bei fortschreitendem Verschleiß des Verschleißabschnitts ein Durchflussquerschnitt des Fluidkanals verändert wird oder aber nicht mehr weiter verändert wird. Es ist auch denkbar, dass ein Fluiddurchfluss durch den Fluidkanal im Neuzustand der Sauggreifereinrichtung bereits freigegeben ist, im Zuge eines fortschreitenden Verschleißes des Verschleißabschnitts aber ein Durchflussquerschnitt des Fluidkanals verändert wird. Insbesondere können Fluidkanal und Verschleißabschnitt derart ausgebildet sein, dass sich ein Durchflussquerschnitt des Fluidkanals im Zuge eines fortschreitenden Verschleißes des Verschleißabschnitts vergrößert. Der Fluidkanal kann beispielsweise orthogonal, parallel oder schräg zu einer Verschleißrichtung verlaufend ausgebildet sein.

Die Verschleißdetektionseinrichtung umfasst außerdem eine Sensoreinrichtung, welche dazu ausgebildet ist, einen Druck in dem Fluidkanal und/oder einen Fluiddurchfluss, insbesondere Luftdurchfluss, durch den Fluidkanal zu detektieren. Zu diesem Zweck kann die Sensoreinrichtung insbesondere einen Drucksensor und/oder einen Strömungssensor umfassen. Der Druck- bzw. der Strömungssensor ist insbesondere dazu ausgebildet, einen Druck bzw. Fluiddurchfluss zu messen und die Druck- bzw. Durchflussinformation dann als elektronisches Messsignal auszugeben, insbesondere an eine Auswerteeinrichtung zu übermitteln.

Eine solche Sauggreifereinrichtung ermöglicht es, einen Verschleißzustand des Saugkörpers mit einfachen Mitteln zuverlässig und automatisiert zu überwachen. Die Verschleißdetektion basiert auf dem Grundprinzip, dass ein Verschleißabschnitt im Zuge des gebrauchsbedingten Verschleißes des Saugkörpers selbst einem Testverschleiß unterliegt, in Folge dessen fluidische Eigenschaften eines mit dem Verschleißabschnitt zusammenwirkenden Fluidkanals verändert werden. Insbesondere wird in Folge des Verschleißes des Verschleißabschnitts ein Druck in dem Fluidkanal und/oder ein Durchfluss durch den Fluidkanal verändert. Eine solche Druck- oder Durchflussänderung kann dann mittels der Sensoreinrichtung detektiert werden und auf diese Weise auf einen Verschleißzustand des Saugkörpers geschlossen werden. Die zur Messung von Druck und/oder Durchfluss verwendeten Sensoren sind in der Funktion robust, sodass eine zuverlässige Verschleißdetektion begünstigt ist. Zudem sind solche Sensoren vergleichsweise kostengünstig erhältlich.

Im Zuge eines bestimmungsgemäßen Gebrauchs der Sauggreifereinrichtung kann es vorkommen, dass der Saugkörper an einer bestimmten Stelle besonders starkem Verschleiß unterliegt, bspw. wenn der Saugkörper immer mit einer gleichen Kante an einen Gegenstand angreift. Um lokale Verschleißunterschiede detektieren zu können, kann es daher vorteilhaft sein, wenn mehrere Fluidkanäle und mehrere Verschleißabschnitte vorgesehen sind. Beispielsweise können die Fluidkanäle und die Verschleißabschnitte dann über einen Umfang des Saugkörpers, bspw. gleichmäßig, verteilt angeordnet sein.

Der Verschleißabschnitt stellt insbesondere eine den Fluidkanal zumindest abschnittsweise begrenzende Wandung bereit. Insofern handelt es sich bei dem Verschleißabschnitt insbesondere um einen Materialabschnitt, welcher den Fluidkanal zumindest abschnittsweise begrenzt.

Der Verschleißabschnitt kann insbesondere aus einem Kunststoff, weiter insbesondere aus einem Elastomer, bestehen. Insofern wird bei einem Verschleiß des Verschleißabschnitts kein unerwünschter metallischer Abtrieb erzeugt. In vorteilhafter Weise kann der Verschleißabschnitt aus dem gleichen Material bestehen, aus dem auch der Saugkörper besteht. Saugkörper und Verschleißabschnitt weisen dann insbesondere den gleichen Abriebwiderstand auf.

Es ist denkbar, dass der Verschleißabschnitt durch einen Verschleißkörper bereitgestellt ist, welcher von dem Saugkörper separat ausgebildet ist. Dann ist insbesondere auch der Fluidkanal in dem Verschleißkörper ausgebildet. Der Verschleißkörper kann beispielsweise derart angeordnet sein, dass eine Verschleißfläche des Verschleißabschnitts mit dem Anlageabschnitt des Saugkörpers bündig angeordnet ist. Beispielsweise kann der Verschleißkörper über eine Halteeinrichtung mit dem Saugkörper verbunden sein. Es ist auch denkbar, dass die Verschleißdetektionseinrichtung, insbesondere umfassend Verschleißabschnitt, Fluidkanal und/oder Sensoreinrichtung, als von dem Saugkörper separat bereitgestelltes Detektionsmodul ausgebildet ist.

In vorteilhafter Weise kann der Verschleißabschnitt aber auch einstückig, insbesondere monolithisch, mit dem Saugkörper ausgebildet sein. Insbesondere kann der Verschleißabschnitt durch eine Saugkörperwandung des Saugkörpers bereitgestellt sein. Vorzugsweise kann es sich bei dem Verschleißabschnitt um einen Teilabschnitt der Saugkörperwandung handeln, insbesondere um einen Teilbereich des Anlageabschnitts zur Anlage an einen anzusaugenden Gegenstand. Eine solche Ausgestaltung ermöglicht insofern eine direkte und somit besonders genaue Messung eines Verschleißzustands des Saugkörpers. Zudem ist eine solche Sauggreifereinrichtung besonders kostengünstig und kompakt aufgebaut, da eine Anzahl an Einzelbauteilen reduziert ist.

Insbesondere kann der Fluidkanal auch in dem Saugkörper ausgebildet sein. Beispielsweise ist es denkbar, dass der Fluidkanal von einer Saugkörperwandung begrenzt ist, also innenliegend ausgebildet ist.

Der Verschleißabschnitt und der Fluidkanal können insbesondere derart ausgebildet sein, dass in einem unverschlissenen Neuzustand des Verschleißabschnitts der Fluidkanal an einem ersten Kanalende von dem Verschleißabschnitt verschlossen ist und dass bei Erreichen eines vorgegebenen Verschleißgrades, insbesondere bei Überschreiten einer vorgegebenen Abriebmenge, des Verschleißabschnitts das erste Kanalende geöffnet wird. Insofern ist im Neuzustand ein Fluiddurchfluss durch den Fluidkanal insbesondere blockiert. Nach Öffnung des Kanalendes ist dann ein Fluiddurchfluss durch den Fluidkanal insbesondere ermöglicht, was als Druck- und/oder Durchflussänderung von der Sensoreinrichtung detektiert werden kann. Bei dem vorgegebenen Verschleißgrad kann es sich insbesondere um einen Grenz-Verschleißgrad des Saugkörpers handeln, bei Erreichen dessen der Saugkörper unmittelbar oder zumindest in naher Zukunft (beispielsweise spätestens nach weiteren 100 Greifzyklen) ausgetauscht werden muss. Es ist möglich, dass der Verschleißabschnitt und der Fluidkanal derart ausgebildet sind, dass sich der Durchflussquerschnitt des Fluidkanals im Zuge eines fortschreitenden Verschleißes des Verschleißabschnitts nach Öffnen des Fluidkanals verändert oder aber konstant bleibt. Im letzteren Fall kann der Fluidkanal beispielsweise zylindrisch ausgebildet sein.

Im Rahmen einer vorteilhaften Ausgestaltung können der Verschleißabschnitt und der Fluidkanal insbesondere derart ausgebildet sein, dass sich ein Durchflussquerschnitt des Fluidkanals im Zuge eines fortschreitenden Verschleißes des Verschleißabschnitts kontinuierlich verändert. Dies ermöglicht es, einen Verschleißgrad des Saugkörpers engmaschig, insbesondere stufenlos, zu überwachen. Insbesondere können Verschleißabschnitt und Fluidkanal derart ausgebildet sein, dass sich ein Durchflussquerschnitt des Fluidkanals im Zuge eines fortschreitenden Verschleißes des Verschleißabschnitts vergrößert.

Insbesondere kann sich der Fluidkanal zumindest abschnittsweise aufweiten oder verjüngen. Insofern kann der Fluidkanal derart ausgebildet sein, dass sich entlang seiner Längserstreckung fortschreitend sein Durchflussquerschnitt zumindest abschnittsweise verkleinert oder vergrößert. Vorzugsweise weitet sich der Fluidkanal in Verschleißrichtung, insbesondere in einer Richtung orthogonal zu einem Anlageabschnitt des Saugkörpers, zumindest abschnittsweise auf. Insofern wird im Zuge eines fortschreitenden Verschleißes des Verschleißabschnitts ein Durchflussquerschnitt des Fluidkanals erhöht, was dann als Druck- oder Durchflussänderung mittels der Sensoreinrichtung detektiert werden kann. Beispielsweise ist es denkbar, dass sich der Verschleißabschnitt, insbesondere in Verschleißrichtung, trichterförmig, insbesondere konisch, aufweitet.

Im Rahmen einer vorteilhaften Ausgestaltung können der Verschleißabschnitt und der Fluidkanal derart ausgebildet sein und miteinander zusammenwirken, dass bei Erreichen eines vorgegebenen Verschleißgrades, insbesondere bei Überschreiten einer vorgegebenen Abriebmenge, des Verschleißabschnitts eine fluidische Verbindung zwischen dem Fluidkanal und einem von dem Saugkörper begrenzten Sauginnenraum hergestellt ist. Insofern können der Verschleißabschnitt und der Fluidkanal derart ausgebildet sein, dass der Fluidkanal bei Erreichen eines vorgegebenen Verschleißgrades des Verschleißabschnitts mit seinem ersten Kanalende in den Sauginnenraum einmündet. Bei einer solchen Ausgestaltung kann dann das Erreichen des Verschleißgrades des Saugkörpers durch Erfassen einer Druckänderung in dem Fluidkanal oder in dem Sauginnenraum detektiert werden, insbesondere wenn der Sauginnenraum mit Unterdruck beaufschlagt ist. Die Sensoreinrichtung kann dann insbesondere einen mit dem Fluidkanal oder dem Sauginnenraum zusammenwirkenden Unterdrucksensor umfassen.

Im Rahmen einer vorteilhaften Ausgestaltung kann der Fluidkanal derart ausgebildet sein, dass er an seinem dem Verschleißabschnitt abgewandten zweiten Kanalende in einen am Saugkörper angeordneten Ringkanal, insbesondere Ringnut, einmündet. Eine solche Ausgestaltung ermöglicht es, die Sensoreinrichtung an beliebigen Positionen entlang des Ringkanals anzuordnen und somit unabhängig von der Position und/oder Orientierung des Fluidkanals. Darüber hinaus ist es denkbar, dass mehrere Fluidkanäle vorgesehen sind, welche in einen gemeinsamen Ringkanal einmünden. Der Ringkanal bzw. die Ringnut kann einstückig mit dem Saugkörper ausgebildet sein. Es ist auch möglich, dass der Ringkanal bzw. die Ringnut in einem von dem Saugkörper separat bereitgestellten, beispielsweise tellerförmigen, Bauteil ausgebildet ist. Eine solche Ausgestaltung kann insbesondre bei Verwendung von Elastomersaugkörpern eine Anbindung der Sensoreinrichtung erleichtern.

Besonders vorteilhaft kann es zudem sein, wenn der Fluidkanal, insbesondere an seinem dem Verschleißabschnitt abgewandten zweiten Kanalende, eine Fluid-Schnittstelle zum fluidischen Anschluss des Fluidkanals aufweist. Insbesondere kann die Fluid-Schnittstelle dazu ausgebildet sein, den Fluidkanal mit der Sensoreinrichtung fluidisch zu verbinden. Beispielsweise kann die Fluid-Schnittstelle zum Anschluss einer Fluidleitung, insbesondere eines Schlauchs, ausgebildet sein.

Im Rahmen einer vorteilhaften Ausgestaltung kann die Fluid-Schnittstelle einstückig mit dem Saugkörper ausgebildet sein, insbesondere dann, wenn der Fluidkanal in dem Saugkörper ausgebildet ist. Saugkörper und Fluid-Schnittstelle können somit in einem Guss gefertigt werden, was eine Herstellung vereinfacht. Zudem sind bei einer solchen Ausgestaltung Verbindungsstellen und somit potentielle Schwachstellen reduziert.

Die Fluid-Schnittstelle kann insbesondere einen einstückig mit dem Saugkörper ausgebildeten Anschlussnippel zum Anschluss einer Fluidleitung, insbesondere eines Schlauchs, umfassen. Alternativ oder ergänzend kann die Fluid-Schnittstelle einen einstückig mit dem Saugkörper ausgebildeten und in den Fluidkanal einmündenden Schlauch umfassen. Insbesondere kann sich der Schlauch von dem Saugkörper weg erstrecken.

Im Rahmen einer vorteilhaften Ausgestaltung kann die Verschleißdetektionseinrichtung außerdem eine mit dem Fluidkanal fluidisch verbindbare oder verbundene Druckquelle umfassen. Die Druckquelle kann insbesondere dazu ausgebildet sein, den Fluidkanal mit Druck, insbesondere mit Überdruck, weiter insbesondere mit Druckluft, zu beaufschlagen. Die Druckquelle ist insbesondere dazu ausgebildet, den Fluidkanal mit einem vorgebbaren Druck konstant zu beaufschlagen. Beispielsweise kann es sich bei der Druckquelle um eine Druckluftleitung oder eine Unterdruckerzeugungsvorrichtung handeln. Insbesondere kann die Druckquelle über ein Ventil zuschaltbar und somit eine Beaufschlagung des Fluidkanals mit Druck steuerbar sein. Zu diesem Zweck kann die Sauggreifereinrichtung eine Steuereinrichtung zur Ansteuerung der Druckquelle, insbesondere zur Ansteuerung des Ventils, umfassen. Die Steuereinrichtung kann insbesondere auch mit der Sensoreinrichtung zusammenwirken, insbesondere diese ansteuern. Der von der Druckquelle bereitgestellte Druck kann als Testdruck verwendet werden, um eine verschleißbedingte Veränderung des Fluidkanals zu detektieren. Beispielsweise ist es denkbar, dass der Fluidkanal mit einem vorgegebenen konstanten Druck beaufschlagt wird. Eine Öffnung des Fluidkanals oder eine Änderung des Durchflussquerschnitts des Fluidkanal führt dann insbesondere zu einer Änderung des Luftdurchflusses durch den Fluidkanal, welche als Druck- und/oder Durchflussänderung von der Sensoreinrichtung detektiert werden kann. Auf diese Weise lässt sich ein Verschleißzustand des Sauggreifers unter kontrollierten Bedingungen detektieren.

Die Verschleißdetektionseinrichtung kann außerdem eine mit der Sensoreinrichtung zusammenwirkende Auswerteeinrichtung umfassen. Insbesondere kann die Auswerteeinrichtung eine Datenverarbeitungsanlage umfassen. Die Auswerteeinrichtung kann insbesondere dazu eingerichtet sein, in Abhängigkeit eines von der Sensoreinrichtung detektierten Drucks und/oder Durchflusses ein Verschleißsignal zu erzeugen, das den Verschleißzustand des Saugkörpers repräsentiert. Insofern kann auf einfache Weise automatisiert ein Verschleißzustand des Saugkörpers ermittelt werden. Die Auswerteeinrichtung kann von dem Sauggreifer separat bereitgestellt sein. Beispielsweise ist es denkbar, dass die Auswerteeinrichtung Teil eines Cloud-Computersystems ist. Dann kann die Sensoreinrichtung über eine Kommunikationsschnittstelle, zum Beispiel eine WLAN- oder LAN-Schnittstelle, verfügen, über welche Messsignale an die Auswerteeinrichtung übermittelt werden können. Es ist aber auch möglich, dass die Auswerteeinrichtung an dem Sauggreifer selbst angeordnet ist. Die Auswerteeinrichtung kann beispielsweise eine Anzeigeeinrichtung umfassen, welche einen Verschleißzustand des Saugkörpers visualisiert.

In vorteilhafter Weise kann die Auswerteeinrichtung dazu eingerichtet sein, zum Erzeugen des Verschleißsignals ein von der Sensoreinrichtung empfangenes Messsignal mit einem in einer Speichereinrichtung der Auswerteeinrichtung hinterlegten Referenzmesssignal zu vergleichen. Insbesondere kann das Verschleißsignal dann einen betriebsgeeigneten Verschleißzustand des Saugkörpers repräsentieren, wenn das Messsignal einen vorgegebenen, insbesondere in der Speichereinrichtung der Auswerteeinrichtung hinterlegten oder hinterlegbaren, Schwellwert überschreitet. Das Verschleißsignal kann insbesondere dann einen betriebsungeeigneten Verschleißzustand des Sauggreifers repräsentieren, wenn das Messsignal den Schwellwert unterschreitet.

Die eingangs genannte Aufgabe wird auch durch ein Verfahren zum Betreiben einer Sauggreifereinrichtung gemäß Anspruch 14 gelöst. Die vorstehend im Zusammenhang mit der Sauggreifereinrichtung erläuterten Merkmale und Vorteile können zur Ausgestaltung des Verfahrens dienen.

Das Verfahren ist zum Betreiben einer Sauggreifereinrichtung ausgebildet, welche eine vorstehend erläuterte Druckquelle zum Beaufschlagen des Fluidkanals mit Druck und eine mit der Sensoreinrichtung zusammenwirkende Auswerteeinrichtung umfasst. Insbesondere handelt es sich bei dem Verfahren um ein Verfahren zum Ermitteln eines Verschleißzustandes des Saugkörpers mittels einer solchen Sauggreifereinrichtung. Gemäß dem Verfahren wird der Fluidkanal zunächst über die Druckquelle mit Druck, insbesondere Überdruck, weiter insbesondere Druckluft, beaufschlagt. Es ist möglich, dass der Fluidkanal kontinuierlich, insbesondere kontinuierlich während eines Betriebs des Sauggreifers, mit Druck beaufschlagt wird. Es ist auch möglich, dass der Fluidkanal nur in gewissen zeitlichen Abständen (intermittierend) über die Druckquelle mit Druck beaufschlagt wird.

Während des Beaufschlagens mit Druck wird mittels der Sensoreinrichtung ein Druck in dem Fluidkanal und oder ein Fluiddurchfluss durch den Fluidkanal erfasst und in Form eines Messsignals an die Auswerteeinrichtung weitergeleitet. Wie vorstehend erläutert, kann eine verschleißbedingte Änderung des Fluidkanals zu einer Druck-und/oder Durchflussänderung führen, welche dann von der Sensoreinrichtung detektiert wird.

In Abhängigkeit des von der Sensoreinrichtung erfassten Drucks und/oder Durchflusses wird sodann mittels der Auswerteeinrichtung ein Verschleißsignal erzeugt, das einen Verschleißzustand des Saugkörpers präsentiert.

Beispielsweise ist es denkbar, dass mittels der Auswerteeinrichtung das von der Sensoreinrichtung erzeugte Messsignal mit einem in einer Speichereinrichtung der Auswerteeinrichtung hinterlegten Referenzmesssignal verglichen wird und dann ein den Verschleißzustand des Saugkörpers repräsentierendes Verschleißsignal ausgegeben wird. Die Auswerteeinrichtung kann z.B. dazu eingerichtet sein, dann ein Verschleißsignal ausgegeben, welches einen betriebsgeeigneten Verschleißzustand repräsentiert, wenn das Messsignal einen vorgegebenen Schwellwert unterschreitet und/oder dann ein Verschleißsignal ausgeben, welches einen betriebsungeeigneten Verschleißzustand repräsentiert, wenn das Messsignal den Schwellwert überschreitet.

Die Erfindung wird im Folgenden anhand der Figuren näher erläutert.

Es zeigen:
- Fig. 1a: schematische Darstellung einer Ausgestaltung einer Sauggreifereinrichtung in einem Neuzustand in einer teilweisen Schnittansicht;
- Fig. 1b: schematische Darstellung der Sauggreifereinrichtung gemäß Fig. 1a mit bereits teilweise verschlissenem Saugkörper;
- Fig. 2: schematische Darstellung einer weiteren Ausgestaltung eines Saugkörpers in einer teilweisen Schnittansicht;
- Fig. 3: schematische Darstellung einer weiteren Ausgestaltung eines Saugkörpers in einer teilweisen Schnittansicht;
- Fig. 4: schematische Darstellung einer weiteren Ausgestaltung eines Saugkörpers in einer Seitenansicht;
- Fig. 5: schematische Darstellung einer weiteren Ausgestaltung eines Saugkörpers in einer Seitenansicht;
- Fig. 6: schematische Darstellung einer weiteren Ausgestaltung eines Saugkörpers in einer Seitenansicht;
- Fig. 7: schematische Darstellung einer weiteren Ausgestaltung einer Sauggreifereinrichtung in einer Seitenansicht; und
- Fig. 8: schematische Darstellung einer weiteren Ausgestaltung einer Sauggreifereinrichtung in einer Seitenansicht.

In der nachfolgenden Beschreibung sowie in den Figuren sind für identische oder einander entsprechende Merkmale jeweils dieselben Bezugszeichen verwendet.

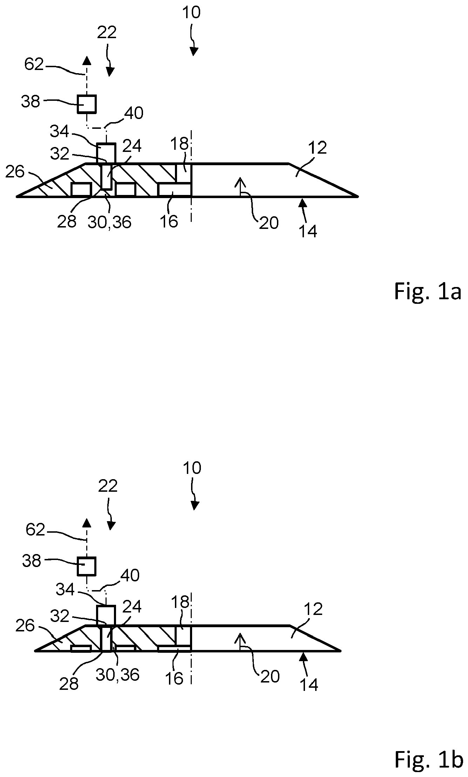

Die Figur 1 zeigt eine erste Ausgestaltung einer Sauggreifereinrichtung, welche insgesamt mit dem Bezugszeichen 10 bezeichnet ist. Die Sauggreifereinrichtung 10 umfasst einen Saugkörper 12, welcher in dem dargestellten Beispiel als Elastomersauger ausgebildet ist. Bei nicht dargestellten Ausgestaltungen kann es sich bei dem Saugkörper 12 beispielsweise auch um ein poröses Schaummaterial handeln.

Der Saugkörper 12 dient zum Ansaugen und somit zum Greifen eines Gegenstands (nicht dargestellt). Bei bestimmungsgemäßem Gebrauch wird der Sauggreifer 12 hierzu mit einem Anlageabschnitt 14 an eine Außenfläche des zu greifenden Gegenstands aufgesetzt und der Gegenstand dann mittels Unterdruck angesaugt. Zu diesem Zweck umfasst der Saugkörper 12 mehrere Unterdruckkanäle 16, welche über einen Unterdruckanschluss 18 mit Unterdruck versorgbar sind. Beispielsweise kann der Unterdruckanschluss 18 mit einer Unterdruckerzeugungsvorrichtung (nicht dargestellt) verbunden sein. Zum Ablegen eines angesaugten Gegenstands können dann die Unterdruckkanäle 16 wieder belüftet werden, beispielsweise über den Anschluss 18.

Im Zuge dieses bestimmungsgemäßen Gebrauchs, also bei wiederholtem Ansaugen und Ablegen eines Gegenstands, unterliegt der Saugkörper 12 zumindest abschnittsweise einem gebrauchsbedingten Verschleiß, insbesondere im Bereich des Anlageabschnitts 14. Dies ist in den Figuren 1a und 1b schematisch verdeutlicht, welche die Sauggreifereinrichtung 10 in einem Neuzustand (vgl. Fig. 1a) und einem gebrauchten Zustand des Saugkörpers 12 (vgl. Fig. 1b) zeigen. Eine Hauptverschleißrichtung ist in den Figuren durch den mit Bezugszeichen 20 bezeichneten Pfeil angedeutet. Bei dem Verschleiß handelt es sich insbesondere um mechanischen Abrieb des Saugkörpermaterials, bspw. infolge von Reibung zwischen dem Saugkörper 12 und dem angesaugten Gegenstand.

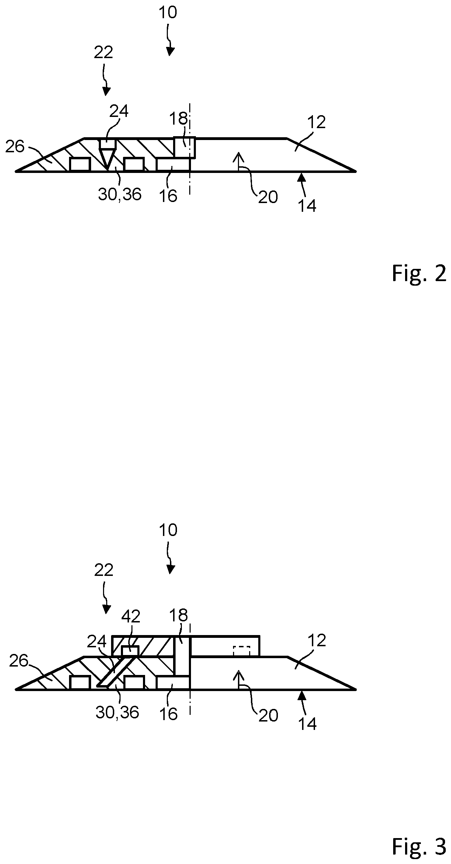

Um einen Verschleißzustand des Saugkörpers 12 überwachen zu können, umfasst die Sauggreifereinrichtung 10 eine Verschleißdetektionseinrichtung 22. Die Verschleißdetektionseinrichtung 22 umfasst einen Fluidkanal 24, welcher in dem dargestellten Beispiel in dem Saugkörper 12, insbesondere in einer Saugkörperwandung 26, ausgebildet ist. Beispielhaft ist der Fluidkanal 24 parallel zu der Hauptverschleißrichtung 20 angeordnet. Es ist aber auch denkbar, dass der Fluidkanal 24 orthogonal oder schräg zu der Hauptverschleißrichtung 20 angeordnet ist (vgl. Fig. 3) .

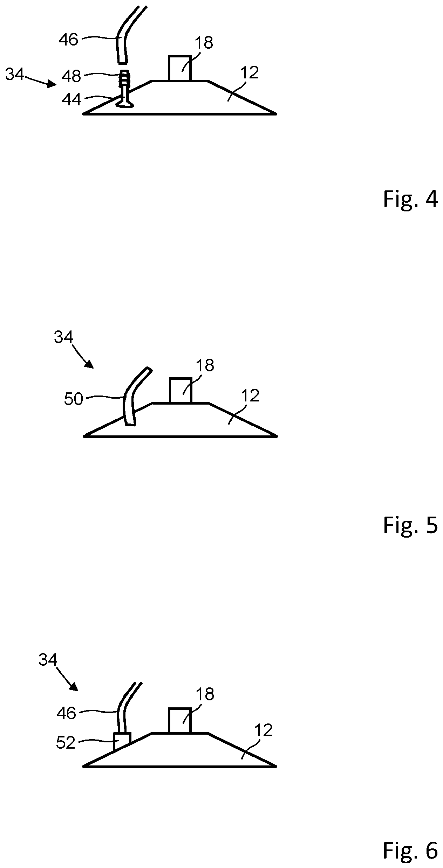

In dem in Fig. 1a dargestellten Neuzustand des Saugkörpers 12 ist der Fluidkanal 24 an einem ersten Kanalende 28 von einem Materialabschnitt 30 des Saugkörpers 12 verschlossen. An seinem zweiten Kanalende 32 weist der Fluidkanal 24 eine Fluid-Schnittstelle 34 auf, über welche der Fluidkanal 24 fluidisch kontaktierbar ist (nachfolgend noch in Bezug auf die Figuren 4 bis 6 im Detail beschrieben).

Der Materialabschnitt 30 unterliegt wie die umgebenden Bereiche des Anlageabschnitts 14 des Saugkörpers 12 bei bestimmungsgemäß Gebrauch des Saugkörpers 12 einem Materialabrieb. Der Materialabschnitt 30 bildet insofern einen mit dem Fluidkanal zusammenwirkenden Verschleißabschnitt 36.

Bei Erreichen eines vorgegebenen Verschleißgrades des Saugkörpers 12 bzw. des Verschleißabschnitts 36, also dann wenn bereits eine gewisse Materialmenge des Saugkörpers 12 abgerieben ist, wird der Fluidkanal 24 an seinem ersten Kanalende 28 geöffnet, sodass ein Fluiddurchfluss durch den Fluidkanal 24 ermöglicht ist (vgl. Fig. 1b). Bei dem in Figur 1b dargestellten Beispiel mündet der Fluidkanal 24 im geöffneten Zustand beispielhaft in einen die Unterdruckkanäle 16 umfassenden Sauginnenraum des Saugkörpers 12. Hierdurch ändert sich ein Druck bzw. ein Fluiddurchfluss in dem Fluidkanal 24, was insofern charakteristisch für den aktuellen Verschleißzustand des Saugkörpers 12 ist.

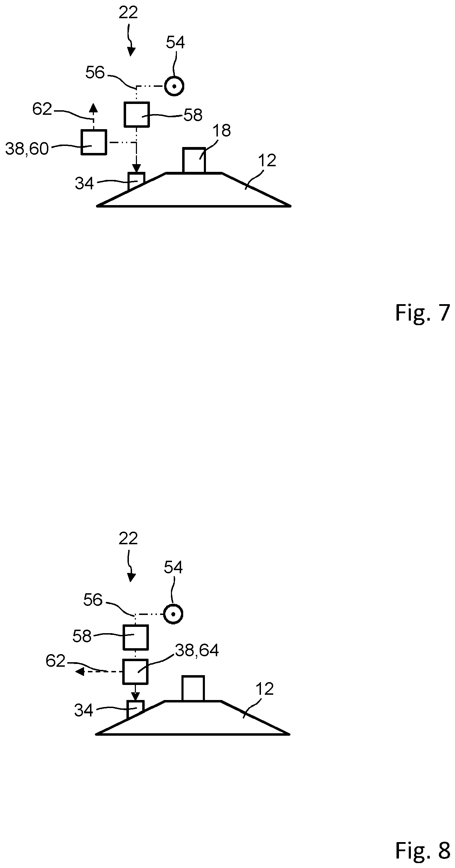

Um eine solche Druck- und/oder Durchflussänderung detektieren zu können, umfasst die Verschleißdetektionseinrichtung 22 eine entsprechend ausgebildete Sensoreinrichtung 38, welche beispielswiese einen Druck- und/oder Strömungssensor umfassen kann (nachfolgend in Bezug auf die Figuren 7 und 8 beispielhaft näher erläutert). Wie in den Figuren angedeutet, ist die Sensoreinrichtung 38 über eine Fluidleitung 40 mit der Fluid-Schnittstelle 34 des Fluidkanals 24 strömungsverbunden.

Insbesondere kann ein gemessener Druck oder Durchfluss dann von der Sensoreinrichtung 38 in Form eines Messsignals an eine Auswerteeinrichtung (nicht dargestellt) der Sauggreifereinrichtung 10 übermittelt werden (in den Figuren durch den Pfeil 62 angedeutet). Wie bereits erwähnt, kann die Auswerteeinrichtung dazu ausgebildet sein, aus dem von der Sensoreinrichtung 38 erhaltenen Messsignal ein Verschleißsignal zu erzeugen, das den Verschleißzustand des Saugkörpers 12 repräsentiert.

Die Figur 2 zeigt eine weitere Ausgestaltung eines Saugkörpers 12, bei dem der Fluidkanal 24 sich in Verschleißrichtung 20 konisch aufweitet. Bei dieser Ausgestaltung wird insofern im Zuge eines fortschreitenden Verschleißes des Verschleißabschnitts 36 bzw. des Saugkörpers 12 ein Durchflussquerschnitt des Fluidkanals 24, insbesondere kontinuierlich, vergrößert. Eine solche Änderung kann dann wieder über die Sensoreinrichtung 38 als Druck- und/oder Strömungsänderung detektiert werden und somit ein Verschleißzustand des Saugkörpers 12 ermittelt werden.

Die Figur 3 zeigt eine weitere Ausgestaltung der Sauggreifereinrichtung 10, bei welcher der Fluidkanal 24 zu der Hauptverschleißrichtung 20 geneigt orientiert ist. In dem dargestellten Beispiel mündet der Fluidkanal 24 an seinem dem Verschleißabschnitt 36 abgewandten zweiten Kanalende 32 in einen Ringkanal 42.

Bei nicht dargestellten Ausgestaltungen ist es grundsätzlich auch denkbar, dass der Fluidkanal 24 und der Verschleißabschnitt 36 von einem Verschleißkörper bereitgestellt sind, welcher von dem Saugkörper 12 separat ausgebildet ist.

Im Folgenden werden unter Bezugnahme auf die Figuren 4 bis 6 verschiedene Ausgestaltungen der Fluid-Schnittstelle 34 beschrieben, welche unabhängig von der Ausgestaltung des Fluidkanals 24 vorgesehen sein können.

Bei der in Figur 4 dargestellten Ausgestaltung umfasst die Fluid-Schnittstelle 34 einen Anschlussnippel 44, welcher mit dem Fluidkanal 24 strömungsverbunden ist. Der Anschlussnippel 44 ist beispielhaft einstückig mit dem Saugkörper 12 ausgebildet. Der Anschlussnippel 44 ist insbesondere zur Verbindung mit einem Fluidschlauch 46 ausgebildet. Beispielsweise kann der Anschlussnippel 44 Widerhaken 48 für den Schlauch 46 aufweisen.

Bei der in Figur 5 dargestellten Ausgestaltung umfasst die Fluid-Schnittstelle 34 einen mit dem Saugkörper 12 einstückig ausgebildeten Schlauch 50, welcher mit dem Fluidkanal 24 strömungsverbunden ist und sich von dem Saugkörper 12 weg erstreckt.

Es ist auch möglich, dass die Fluid-Schnittstelle 34 einen außenliegenden Anschlussstutzen 52 für einen Schlauch 46 umfasst. Der Anschlussstutzen 52 kann beispielhaft von dem Saugkörper 12 separat bereitgestellt sein und dann mit dem Saugkörper 12 verbunden werden, beispielsweise über eine Steckverbindung (vgl. Fig. 6).

Die Figuren 7 und 8 zeigen weitere Ausgestaltungen der Verschleißdetektionseinrichtung 22, welche unabhängig von der Ausgestaltung des Fluidkanals 24 bzw. der Fluid-Schnittstelle 34 vorgesehen sein können.

Bei der in Figur 7 dargestellten Ausgestaltung umfasst die Verschleißdetektionseinrichtung 22 eine Druckquelle 54, welche beispielhaft als Überdruckquelle ausgebildet ist. Die Druckquelle kann insbesondere dazu ausgebildet sein, den Fluidkanal mit konstantem Druck, insbesondere Druckluft, zu beaufschlagen. Die Druckquelle 54 ist über eine Fluidverbindung 56 mit der Fluid-Schnittstelle 34 des Fluidkanals 24 strömungsverbunden und beispielhaft über ein Ventil 58 wahlweise zu- oder wegschaltbar. Insofern ist der Fluidkanal 24 wahlweise mit Druck, insbesondere Druckluft, beaufschlagbar. In der in Figur 7 dargestellten Ausgestaltung umfasst die Sensoreinrichtung 38 einen Drucksensor 60, welcher mit dem Fluidkanal 24 über die Fluidleitung 56 strömungsverbunden ist.

Zur Detektion eines Verschleißzustandes des Saugkörpers 12 kann der Fluidkanal 24 mittels der Druckquelle 54, kontinuierlich oder intermittierend während eines Betriebs des Saugkörpers 12, mit Druck, insbesondere Druckluft, beaufschlagt werden. Vorzugsweise wird der Fluidkanal 24 mit konstantem Druck beaufschlagt. Ein resultierender Druck in dem Fluidkanal 24 kann dann durch den Drucksensor 60 detektiert werden. Ändert sich nun im Zuge des gebrauchsbedingten Verschleißes des Saugkörpers 12 bzw. des Verschleißabschnitts 36 ein Durchflussquerschnitt in dem Fluidkanal 24 oder wird der Fluidkanal 24 überhaupt erst geöffnet, kann dies als Druckänderung von dem Drucksensor 60 detektiert werden. Wie vorstehend erwähnt, kann der Drucksensor mit einer Auswerteeinrichtung verbunden sein, um in Abhängigkeit des gemessenen Drucks ein Verschleißsignal zu ermitteln.

Die in Figur 8 dargestellte Ausgestaltung unterscheidet sich von der in Figur 7 dargestellten Ausgestaltung konstruktiv dadurch, dass anstelle des Drucksensors 60 ein Strömungssensor 64 vorgesehen ist. Der Strömungssensor 64 ist beispielhaft dazu ausgebildet, eine Strömung, insbesondere einen Fluiddurchfluss durch den Fluidkanal 24, zu detektieren. Bei dieser Ausgestaltung der Verschleißdetektionseinrichtung 22 kann eine Veränderung eines Durchflusses durch den Fluidkanal 24 in Folge eines Verschleißes des Verschleißabschnitts 36 mittels des Strömungssensors 64 erfasst werden. Auf diese Weise lässt sich ebenso auf einen Verschleißzustand des Saugkörpers 12 schließen.

## Patentansprüche

1. Sauggreifereinrichtung (10), umfassend
- einen Saugkörper (12), welcher bei bestimmungsgemäßem Gebrauch zumindest abschnittsweise einem gebrauchsbedingten Verschleiß unterliegt
- eine Verschleißdetektionseinrichtung (22) zur Detektion eines Verschleißzustandes des Saugkörpers (12), umfassend:
○ einen Verschleißabschnitt (36), welcher im Zuge des gebrauchsbedingten Verschleißes des Saugkörpers (12) selbst verschleißt; **dadurch gekennzeichnet, dass** die Verschleißdetektionseinrichtung weiterhin umfasst:
○ einen Fluidkanal (24), welcher derart mit dem Verschleißabschnitt (36) zusammenwirkt, dass durch Verschleiß des Verschleißabschnitts (36) ein Durchflussquerschnitt des Fluidkanals (24) verändert wird und/oder ein Fluiddurchfluss durch den Fluidkanal (24) überhaupt erst freigegeben wird,
○ eine Sensoreinrichtung (38), insbesondere umfassend einen Drucksensor (60) und/oder einen Strömungssensor (64), zum Detektieren eines Drucks in dem Fluidkanal (24) und/oder eines Fluiddurchflusses durch den Fluidkanal (24) .

2. Sauggreifereinrichtung (10) nach Anspruch 1, wobei der Verschleißabschnitt (36) eine den Fluidkanal (24) zumindest abschnittsweise begrenzende Wandung bereitstellt.

3. Sauggreifereinrichtung (10) nach Anspruch 1 oder 2, wobei der Verschleißabschnitt (36) aus dem gleichen Material wie der Saugkörper (12) besteht, insbesondere einstückig mit dem Saugkörper (12) ausgebildet ist, weiter insbesondere durch eine Saugkörperwandung (26) gebildet ist.

4. Sauggreifereinrichtung (10) nach einem der vorherigen Ansprüche, wobei der Fluidkanal (24) in dem Saugkörper (12) ausgebildet ist, insbesondere von einer Saugkörperwandung (26) begrenzt ist.

5. Sauggreifereinrichtung (10) nach einem der vorherigen Ansprüche, wobei der Verschleißabschnitt (36) und der Fluidkanal (24) derart ausgebildet sind, dass in einem Neuzustand des Verschleißabschnitts (36) der Fluidkanal (24) an einem Kanalende (28) von dem Verschleißabschnitt (36) verschlossen ist und dass bei Erreichen eines vorgegebenen Verschleißgrades, insbesondere bei Überschreiten einer vorgegebenen Abriebmenge, des Verschleißabschnitts (36) das Kanalende (28) geöffnet wird.

6. Sauggreifereinrichtung (10) nach einem der vorherigen Ansprüche, wobei der Verschleißabschnitt (36) und der Fluidkanal (24) derart ausgebildet sind, dass sich ein Durchflussquerschnitt des Fluidkanals (24) im Zuge eines fortschreitenden Verschleißes des Verschleißabschnitts (36) kontinuierlich verändert, insbesondere vergrößert.

7. Sauggreifereinrichtung (10) nach einem der vorherigen Ansprüche, wobei sich der Fluidkanal (24) zumindest abschnittsweise aufweitet oder verjüngt, insbesondere in Verschleißrichtung trichterförmig, weiter insbesondere konisch, aufweitet.

8. Sauggreifereinrichtung (10) nach einem der vorherigen Ansprüche, wobei der Verschleißabschnitt (36) und der Fluidkanal (24) derart ausgebildet sind, dass bei Erreichen eines vorgegebenen Verschleißgrades, insbesondere bei Überschreiten einer vorgegebenen Abriebmenge, des Verschleißabschnitts (36) eine fluidische Verbindung zwischen dem Fluidkanal (24) und einem von dem Saugkörper (12) begrenzten Sauginnenraum hergestellt ist.

9. Sauggreifereinrichtung (10) nach einem der vorherigen Ansprüche, wobei der Fluidkanal (24) in einen am Saugkörper (12) angeordneten Ringkanal (42), insbesondere Ringnut, mündet.

10. Sauggreifereinrichtung (10) nach einem der vorherigen Ansprüche, wobei der Fluidkanal (24) eine Fluid-Schnittstelle (34) aufweist, insbesondere zur fluidischen Verbindung des Fluidkanals (24) mit der Sensoreinrichtung (38).

11. Sauggreifereinrichtung (10) nach Anspruch 10, wobei die Fluid-Schnittstelle (34) einstückig mit dem Saugkörper (12) ausgebildet ist, insbesondere umfassend einen Anschlussnippel (44) zum Anschluss einer Fluidleitung (46) und/oder einen in den Fluidkanal (24) mündenden Schlauch (50).

12. Sauggreifereinrichtung (10) nach einem der vorherigen Ansprüche, wobei die Verschleißdetektionseinrichtung (22) außerdem eine mit dem Fluidkanal (24) fluidisch verbindbare, insbesondere über ein Ventil (58) zuschaltbare, Druckquelle (54), insbesondere Überdruckquelle, zum Beaufschlagen des Fluidkanals (24) mit Druck, insbesondere mit Überdruck, weiter insbesondere mit Druckluft, umfasst.

13. Sauggreifereinrichtung (10) nach einem der vorherigen Ansprüche, wobei die Verschleißdetektionseinrichtung (22) außerdem eine mit der Sensoreinrichtung (38) zusammenwirkende Auswerteeinrichtung umfasst, welche dazu eingerichtet ist, um in Abhängigkeit eines von der Sensoreinrichtung (38) detektierten Drucks und/oder Durchflusses in dem Fluidkanal (24) ein Verschleißsignal zu erzeugen, das den Verschleißzustand des Saugkörpers (12) repräsentiert.

14. Verfahren zum Betreiben einer Sauggreifereinrichtung (10) nach den Ansprüchen 12 und 13,
wobei der Fluidkanal (24) über die Druckquelle (54) mit Druck, insbesondere Überdruck, weiter insbesondere Druckluft, beaufschlagt wird,
wobei ein Druck in dem Fluidkanal (24) und/oder ein Durchfluss durch den Fluidkanal (24) mittels der Sensoreinrichtung (38) erfasst wird, und
wobei in Abhängigkeit des erfassten Drucks und/oder Durchflusses ein Verschleißsignal mittels der Auswerteeinrichtung erzeugt wird, das einen Verschleißzustand des Saugkörpers (12) repräsentiert.

## Claims

1. Vacuum gripper device (10), comprising
- a suction body (12) which, when used as intended, is subjected to use-related wear, at least in portions,
- a wear detection device (22) for detecting a wear state of the suction body (12), comprising:
○ a wear portion (36), which itself wears in the course of the use-related wear of the suction body (12), **characterized in that** the wear detection device further comprises:
○ a fluid channel (24), which interacts with the wear portion (36) such that, owing to wear of the wear portion (36), a flow cross-section of the fluid channel (24) is changed, and/or a fluid flow through the fluid channel (24) is released first,
○ a sensor device (38), in particular comprising a pressure sensor (60) and/or a flow sensor (64), for detecting a pressure in the fluid channel (24) and/or a fluid flow through the fluid channel (24).

2. Vacuum gripper device (10) according to claim 1, **wherein** the wear portion (36) provides a wall delimiting the fluid channel (24) at least in portions.

3. Vacuum gripper device (10) according to claim 1 or 2, **wherein** the wear portion (36) consists of the same material as the suction body (12), in particular is formed integrally with the suction body (12), more particularly is formed by a suction body wall (26).

4. Vacuum gripper device (10) according to any of the preceding claims, **wherein** the fluid channel (24) is formed in the suction body (12), in particular is delimited by a suction body wall (26).

5. Vacuum gripper device (10) according to any of the preceding claims, **wherein** the wear portion (36) and the fluid channel (24) are designed such that, in a new state of the wear portion (36), the fluid channel (24) is closed at a channel end (28) by the wear portion (36) and such that, when a specified degree of wear of the wear portion (36) is reached, in particular when a specified amount of abrasion of the wear portion is exceeded, the channel end (28) is opened.

6. Vacuum gripper device (10) according to any of the preceding claims, **wherein** the wear portion (36) and the fluid channel (24) are designed such that a flow cross section of the fluid channel (24) continuously changes, in particular increases, in the course of progressive wear of the wear portion (36).

7. Vacuum gripper device (10) according to any of the preceding claims, **wherein** the fluid channel (24) widens or tapers at least in portions, in particular widens in a funnel shape, more particularly conically, in the direction of wear.

8. Vacuum gripper device (10) according to any of the preceding claims, **wherein** the wear portion (36) and the fluid channel (24) are designed such that, when a specified degree of wear of the wear portion (36) is reached, in particular when a specified amount of abrasion of the wear portion is exceeded, a fluidic connection is established between the fluid channel (24) and a suction interior delimited by the suction body (12).

9. Vacuum gripper device (10) according to any of the preceding claims, **wherein** the fluid channel (24) opens into an annular channel (42), in particular an annular groove, arranged on the suction body (12).

10. Vacuum gripper device (10) according to any of the preceding claims, **wherein** the fluid channel (24) has a fluid interface (34), in particular for fluidically connecting the fluid channel (24) to the sensor device (38).

11. Vacuum gripper device (10) according to claim 10, **wherein** the fluid interface (34) is integrally formed with the suction body (12), in particular comprising a connection nipple (44) for connecting a fluid line (46) and/or a tube (50) which opens into the fluid channel (24).

12. Vacuum gripper device (10) according to any of the preceding claims, **wherein** the wear detection device (22) also comprises a pressure source (54) which can be fluidically connected to the fluid channel (24), in particular can be connected via a valve (58), in particular an overpressure source, for applying pressure, in particular overpressure, more particularly compressed air, to the fluid channel (24).

13. Vacuum gripper device (10) according to any of the preceding claims, **wherein** the wear detection device (22) also comprises an evaluation device interacting with the sensor device (38), which evaluation device is configured to generate a wear signal, which represents the wear state of the suction body (12), on the basis of a pressure and/or flow in the fluid channel (24) detected by the sensor device (38).

14. Method for operating a vacuum gripper device (10) according to claims 12 and 13,
**wherein** pressure, in particular overpressure, more particularly compressed air, is applied to the fluid channel (24) via the pressure source (54),
**wherein** a pressure in the fluid channel (24) and/or a flow through the fluid channel (24) is detected by means of the sensor device (38), and
**wherein** a wear signal, which represents a wear state of the suction body (12), is generated by means of the evaluation device on the basis of the detected pressure and/or flow.

## Revendications

1. Dispositif de préhension par aspiration (10), comprenant
- un corps d'aspiration (12), lequel, lors d'une utilisation conforme à l'usage prévu, est soumis au moins sur certaines parties à une usure due à l'utilisation
- un dispositif de détection d'usure (22) pour détecter un état d'usure du corps d'aspiration (12), comprenant :
○ une partie d'usure (36), laquelle s'use au cours de l'usure due à l'utilisation du corps d'aspiration (12) luimême ; **caractérisé en ce que** le dispositif de détection d'usure comprend en outre :
○ un canal de fluide (24), lequel coopère avec la partie d'usure (36) de telle sorte qu'une section transversale de débit du canal de fluide (24) est modifiée par l'usure de la partie d'usure (36) et/ou qu'un débit de fluide à travers le canal de fluide (24) est libéré en premier lieu,
○ un dispositif capteur (38), comprenant en particulier un capteur de pression (60) et/ou un capteur d'écoulement (64), pour détecter une pression dans le canal de fluide (24) et/ou un débit de fluide à travers le canal de fluide (24).

2. Dispositif de préhension par aspiration (10) selon la revendication 1, dans lequel la partie d'usure (36) fournit une paroi délimitant le canal de fluide (24) au moins sur certaines parties.

3. Dispositif de préhension par aspiration (10) selon la revendication 1 ou 2, dans lequel la partie d'usure (36) est constituée du même matériau que le corps d'aspiration (12), est en particulier réalisée d'une seule pièce avec le corps d'aspiration (12), est en outre en particulier formée par une paroi de corps d'aspiration (26).

4. Dispositif de préhension par aspiration (10) selon l'une quelconque des revendications précédentes, dans lequel le canal de fluide (24) est réalisé dans le corps d'aspiration (12), en particulier est délimité par une paroi de corps d'aspiration (26).

5. Dispositif de préhension par aspiration (10) selon l'une quelconque des revendications précédentes, dans lequel la partie d'usure (36) et le canal de fluide (24) sont réalisés de telle sorte que, dans un état neuf de la partie d'usure (36), le canal de fluide (24) est fermé par la partie d'usure (36) au niveau d'une extrémité de canal (28) et que, lorsqu'un degré d'usure prédéfini est atteint, en particulier lorsqu'une quantité d'abrasion prédéfinie de la partie d'usure (36) est dépassée, l'extrémité de canal (28) est ouverte.

6. Dispositif de préhension par aspiration (10) selon l'une quelconque des revendications précédentes, dans lequel la partie d'usure (36) et le canal de fluide (24) sont réalisés de telle sorte qu'une section transversale de débit du canal de fluide (24) se modifie en continu, notamment s'agrandit, au cours d'une usure progressive de la partie d'usure (36).

7. Dispositif de préhension par aspiration (10) selon l'une quelconque des revendications précédentes, dans lequel le canal de fluide (24) s'élargit ou se rétrécit au moins sur certaines parties, en particulier s'élargit en forme d'entonnoir dans le sens de l'usure, en particulier de manière conique.

8. Dispositif de préhension par aspiration (10) selon l'une quelconque des revendications précédentes, dans lequel la partie d'usure (36) et le canal de fluide (24) sont réalisés de telle sorte que, lorsqu'un degré d'usure prédéfini est atteint, en particulier lorsqu'une quantité d'abrasion prédéfinie de la partie d'usure (36) est dépassée, une liaison fluidique est établie entre le canal de fluide (24) et un espace intérieur d'aspiration délimité par le corps d'aspiration (12).

9. Dispositif de préhension par aspiration (10) selon l'une quelconque des revendications précédentes, dans lequel le canal de fluide (24) débouche dans un canal annulaire (42), en particulier une rainure annulaire, disposé sur le corps d'aspiration (12).

10. Dispositif de préhension par aspiration (10) selon l'une quelconque des revendications précédentes, dans lequel le canal de fluide (24) présente une interface de fluide (34), en particulier pour la liaison fluidique du canal de fluide (24) au dispositif capteur (38).

11. Dispositif de préhension par aspiration (10) selon la revendication 10, dans lequel l'interface fluidique (34) est réalisée d'un seul tenant avec le corps d'aspiration (12), comprenant en particulier un manchon de raccordement (44) pour le raccordement d'une conduite de fluide (46) et/ou un tuyau flexible (50) débouchant dans le canal de fluide (24).

12. Dispositif de préhension par aspiration (10) selon l'une quelconque des revendications précédentes, dans lequel le dispositif de détection d'usure (22) comprend en outre une source de pression (54), en particulier source de surpression, pouvant être reliée fluidiquement au canal de fluide (24), en particulier pouvant être mise en circuit par l'intermédiaire d'une soupape (58), pour alimenter le canal de fluide (24) en pression, en particulier en surpression, plus particulièrement en air comprimé.

13. Dispositif de préhension par aspiration (10) selon l'une quelconque des revendications précédentes, dans lequel le dispositif de détection d'usure (22) comprend en outre un dispositif d'évaluation coopérant avec le dispositif capteur (38), lequel est conçu pour générer, en fonction d'une pression et/ou d'un débit dans le canal de fluide (24) détecté par le dispositif capteur (38), un signal d'usure qui représente l'état d'usure du corps d'aspiration (12).

14. Procédé pour faire fonctionner un dispositif de préhension par aspiration (10) selon les revendications 12 et 13, dans lequel le canal de fluide (24) est alimenté en pression, en particulier en surpression, plus particulièrement en air comprimé, par l'intermédiaire de la source de pression (54), dans lequel une pression dans le canal de fluide (24) et/ou un débit à travers le canal de fluide (24) sont acquis au moyen du dispositif capteur (38), et dans lequel, en fonction de la pression et/ou du débit acquis, un signal d'usure est généré au moyen du dispositif d'évaluation, qui représente un état d'usure du corps d'aspiration (12).
